# EUROPEAN PATENT SPECIFICATION

(11) **EP 3 984 843 B1**
(45) Date of publication and mention of the grant of the patent: **13.09.2023**
(21) Application number: 20202585.4
(22) Date of filing: 19.10.2020
(51) Int. Cl.: B60T 15/02

(54) **ELECTRONICALLY CONTROLLED PROTECTION VALVE**
ELEKTRONISCH GESTEUERTES SCHUTZVENTIL
SOUPAPE DE PROTECTION COMMANDÉE ÉLECTRONIQUEMENT

(43) Date of publication of application: 20.04.2022
(73) Proprietor: KNORR-BREMSE Systeme für Nutzfahrzeuge GmbH, 80809 München (DE)
(72) Inventor: POLYAK, Tibor, 6044 Hetényegyháza (HU); RATATICS, Gabor, 6034 Helvecia (HU)

(56) References cited:
- DE-A1- 3 344 841
- DE-A1- 10 333 610
- DE-A1-102018 102 764
- DE-B1- 2 833 788
- US-A1- 2010 072 810

## Description

The present invention relates to a control valve device, especially a protection valve device, for an air treatment device of a vehicle, especially utility vehicle with at least one working inlet; with at least one working outlet; with at least one overflow valve; with at least one pressure limiting valve, wherein the overflow valve and the pressure limiting valve are integrated into at least one common valve unit, wherein the common valve unit is connected with the working inlet and the working outlet; and with at least one solenoid control valve unit.

Further, the present invention relates to multi-circuit protection valve device for an air treatment device of a vehicle, especially utility vehicle, with at least one of such a control valve device.

In the field of vehicles and especially utility or commercial vehicles usually pneumatic systems are used for brake, suspension and other auxiliary systems, and the distribution of the air is handled by a multi-circuit protection valve that can divide the air provided by a compressor or the like, handle the different opening and closing pressure and the pressure limitation of each circuits and the circuit protection.

Such conventional protection valves are already shown in the prior art.

DE 102013000275 A1 shows a method involving an arrangement of a supply line with a trailer brake valve and a reservoir between a trailer-side coupling head and service brake cylinders of wheel brakes in a trailer. A portion of a supply line of a trailer brake circuit is filled to a predetermined upper pressure limit with compressed air, where the pressure required for the air is energetically generated through a compressed air supply device. A relevant portion of the supply line is shut-off by closing a locking element. An independent claim is included for a device for controlling a compressed air-brake system of a vehicle combination consisting of a tractor and a trailer.

DE 102013110736 A1 discloses a compressed air preparation device in which pressure sensors are used. According to the invention, an unadapted pressure signal of the pressure sensors, which is faulty, is fed to a control unit. Individual adaptation dependencies are stored on a permanent memory, on the basis of which the control unit can convert the non-adapted pressure signals into adapted pressure signals which are calibrated and error-cleaned.

DE 102019100788 A1 discloses a method for leakage monitoring of a compressed air system of a motor vehicle, which has a compressed air supply system, a compressor connected to the latter on the input side and several compressed air consumer circuits connected to the latter on the output side.

DE 102008063819 A1 relates to a combined pressure-limiting and overflow valve, particularly for an air preparation unit in a commercial vehicle, wherein the combined pressure-limiting and overflow valve comprises a housing, a cover, an inlet opening, a first outlet opening, a piston, an overflow valve seat, and a pressure-limiting valve seat, wherein both an opening and a closing pressure of the overflow valve seat and an opening and a closing pressure of the pressure-limiting valve seat can be adjusted by means of the adjusting spring.

DE 10 2018 102 764 A1 describes a breaking system for a utility vehicle. Furthermore, DE 103 33 610 A1 describes a compressed air processing system for a vehicle.

According to current solutions of those protection valves, the opening and closing pressure (according to a classic overflow valve operation) as well as the limited pressure are preadjusted and fixed during the assembly of the valve. Therefore, the protection valve cannot be optimized for different applications, changing requirements, and working conditions of the utility vehicle (highway, uphill, parking, etc.). The preadjusting of the opening and closing pressure and the limited pressure is especially given by the valve geometry and also takes a lot of time during the assembly. Furthermore, the overflow valve, the pressure limitation valve and a by-pass are separated function and/or structure units each including many subcomponents.

It is therefore an object of the present invention to improve a control valve device and a corresponding multi circuit-protection valve device as mentioned above, in particular in that the control valve provides more variable operation states, is easier to manufacture and/or assemble, and is simplified in structural terms.

This object is solved according to the present invention with a control valve device according to the features of claim 1. Correspondingly, a control valve device, especially protection valve device, for an air treatment device of a vehicle, especially utility vehicle is provided with at least one working inlet; with at least one working outlet; with at least one overflow valve; with at least one pressure limiting valve, wherein the overflow valve and the pressure limiting valve are integrated into at least one common valve unit, wherein the common valve unit is connected with the working inlet and the working outlet; and with at least one solenoid control valve unit, wherein the solenoid control valve unit is connectable with at least one control chamber of the common valve unit.

The invention is based on the basic idea that, by connecting the solenoid control valve unit that also connected to a pneumatic pressure source with at least one control chamber of the common valve unit, the opening and/or closing pressure and the limited pressure may be variably controlled via a predetermined pressure within the control chamber of the common valve unit. That is, these values can be adjusted dynamically during operation and can be optimized for different conditions of the vehicle in answer to an open and closed state of the solenoid control valve unit controlling the control pressure within the control chamber. The adjusting of these opening and closing pressures of the overflow valve and the pressure limiting valve may be performed very easily and fast via an input signal that may come from one or more pressure sensors of the control valve device or via a CAN bus and may operate a predetermined open and closed state of solenoid control valve unit anytime it is needed.

In particular, overflow valve, the pressure limiting valve, and the solenoid control valve unit form a common construction unit. By integrating the overflow valve, the pressure limiting valve, and the solenoid control valve unit into one construction unit, significantly less components are necessary and advantages in terms of manufacturing efforts and costs as well as assembling efforts and costs, and a weight reduction are provided.

Additionally, the overflow valve and the pressure limiting valve share the same components of the common valve unit. This solution also provides significantly less components as the main components of the overflow valve and the pressure limiting valve such as a piston, sealing elements, a valve seat, a corresponding housing structure with a working inlet and outlet and ports, a pre-tensioned spring, and the control chamber may all be used together. This set-up also provides advantages in terms of manufacturing efforts and costs as well as assembling efforts and costs, and a weight reduction.

Also, the common valve unit comprises at least one valve inlet that is connected to the working inlet via at least one inlet line, wherein at least one control line is branched off the inlet line, and wherein the solenoid control valve unit is arranged in the control line by means of which the solenoid control valve unit is connected to the control chamber. This pneumatic pressure supply structure of the control chamber may be formed structurally in an easy and cost-efficient manner since the inlet line, provided in the control valve device anyway, merely needs to branch off once in order to provide such a control line. Since the control line is depending on a reliable and constant pressure source in order to control the pressure within the pressure chamber accordingly, the easiest solution in the present case is to connect the control line to the inlet line. The inlet line, namely, is constantly fed with pressurized air from a connected air treatment device together which an associated compressor during its operation.

Moreover, control line is branched off the inlet line between the valve inlet and the working inlet. This arrangement enables a fast and simple manufacturing and mounting process of the control valve device and a reliable and stable supply of pressurized fluid, especially pressurized air, may be established. For a reliable operation of the present control valve device it is very important to feed the control line with pressurized air, until the inlet line together with the valve inlet is fed since otherwise control pressure within the control chamber may not be adjustable or controllable, which would lead into a undefined valve operation state. Consequently, the present control valve design depends on a parallel supply of pressurized air to the valve inlet together with the supply of pressurized air to the control chamber since otherwise no predetermined or adjustable opening and closing pressures of the combined overflow and pressure limiting valve could be implemented.

Further, the solenoid control valve unit comprises at least one aeration state for aeration of the control chamber and the solenoid control valve unit comprises at least one de-aeration state for de-aeration of the control chamber. Current solenoid control valve solutions provide fast and well-defined switching states, in the present case an open or aeration state for supplying air as well as a closed or de-aeration state for venting air. Further, the solenoid control valve unit serves as a pilot control valve for the control chamber of the common valve unit such that it enables a precise, dynamic and reliable controlling possibility of the control pressure within the control chamber. This chamber is a closed and sealed chamber whose pressure acts upon a valve control piston together with a pre-tensioned adjusting spring, wherein the control pressure is the main factor for the predetermined opening and closing pressures or characteristics of the common valve unit. Consequently, well defined outlet pressures in relation to the inlet pressure may me adjusted at the working outlet.

On the other hand, in the aeration state, the control chamber is connected to the working inlet via at least the solenoid control valve unit and the control line. This set-up enables an efficient and dynamic supply of pressurized air to the control chamber since the solenoid control valve unit working as a pilot valve unit is arranged in the vicinity of the control chamber. Consequently, the control line is directly connected to the inlet line where it is branched off, resulting in little line lengths and line volumes thus resulting in little system inertia together with a fast aeration or supply of the pressure chamber and a corresponding de-aeration or venting.

In addition, the control line comprises at least one first control line section extending between the solenoid control valve unit and the control chamber and wherein, in the de-aeration state, the control chamber is connected to the atmosphere via the first control line section and the solenoid control valve unit. In order to control the opening and closing pressures of the overflow and pressure limiting valve, a fast and reliable de-aeration of the control chamber is necessary as the resulting compression force generated by the control pressure within the control chamber directly acts upon the pneumatically effective area of the valve piston. As only a section of the whole control line is used for de-aeration of the control chamber, this set-up enables an even smaller line length and line volume thus resulting in an even smaller system inertia together with a fast and precise de-aeration of the pressure chamber.

Especially, the solenoid control valve unit comprises at least one 3/2-way solenoid control valve. According to the invention, the 3/2-way solenoid control valve comprises two control ports for the connection to the control line and for aeration or supply of air from the control line to the control chamber and one de-aeration port for de-aeration the air of the control chamber directly to the atmosphere. A 3/2- way solenoid control valve thus combines a compact valve design having little components with a space-saving, function-extending, light-weighting, and simple valve unit.

Furthermore, the solenoid control valve unit comprises at least one 2/2-way solenoid aeration valve and at least one 2/2-way solenoid de-aeration valve. The design of the solenoid control valve unit with two 2/2-way solenoid valve enables a clear separation between the aeration or air supply process and the de-aeration or air venting process of the control chamber. Thus, a very safe and reliable aeration and de-aeration of the control chamber may be performed resulting in an enhanced operation safety of the whole control valve device and its associated components.

Moreover, the control valve device comprises at least one first pressure sensor that is arranged such that at least one pressure of the working inlet and/or the control chamber is sensed by the first pressure sensor. The first pressure sensor has the very important task to sense or acquire the current pressure values at the working inlet and the control chamber. Without these pressure values, a definite control strategy of the solenoid control valve unit on the one hand, and of the whole control valve device on the other hand, would be impossible. Therefore, the pressure values in the control chamber and in the inlet line have to be sensed continuously in order to control the pressure within the control chamber accordingly that is performed by the solenoid control valve unit accordingly.

Besides, the first pressure sensor is arranged in the inlet line. This arrangement enables a safe and structurally simple sensor position having the advantage that the pressure within the control chamber can also be sensed very simply without arranging a second sensor, for example in the control line. Alternatively or additionally, a further pressure sensor may be arranged in the control line as well.

In particular, the common valve unit comprises at least one valve outlet that is connected to the working outlet via at least one outlet line and wherein the control valve device comprises at least one second pressure sensor that is arranged in the outlet line. This pressure sensor arrangement relates to a further improvement of the control strategy of the control valve device as at least one operation parameter more is sensed leading to precise relation between the actual inlet line pressure and the actual outlet line pressure. This relates to an enhancement of the control strategy of the solenoid control valve unit as well as more information on this pressure relation are present and therefore the solenoid control valve unit may be controlled more precisely.

According to the invention, a multi-circuit protection valve device for an air treatment device of a vehicle, especially utility vehicle, is further provided with at least one control valve device as mentioned above. The advantages as discussed with regard to the control valve device as mentioned above, which is a sub-unit of the multi-circuit protection valve device, are transferable to the multi-circuit protection valve device accordingly.

Further details and advantages of the present invention shall now be disclosed in the embodiments according to the invention in connection with the drawings.

It is shown in
- Fig. 1: a schematic circuit arrangement of a first embodiment of a control valve device according to the invention for an air treatment device of a vehicle;
- Fig. 2: a schematic circuit arrangement of a second embodiment of a control valve device according to the invention for an air treatment device of a vehicle;
- Fig. 3: a schematic sectional drawing of the control valve device according to Fig. 1 or Fig. 2; and
- Fig. 4: a further schematic sectional drawing of the control valve device according to Fig. 1 or Fig. 2.

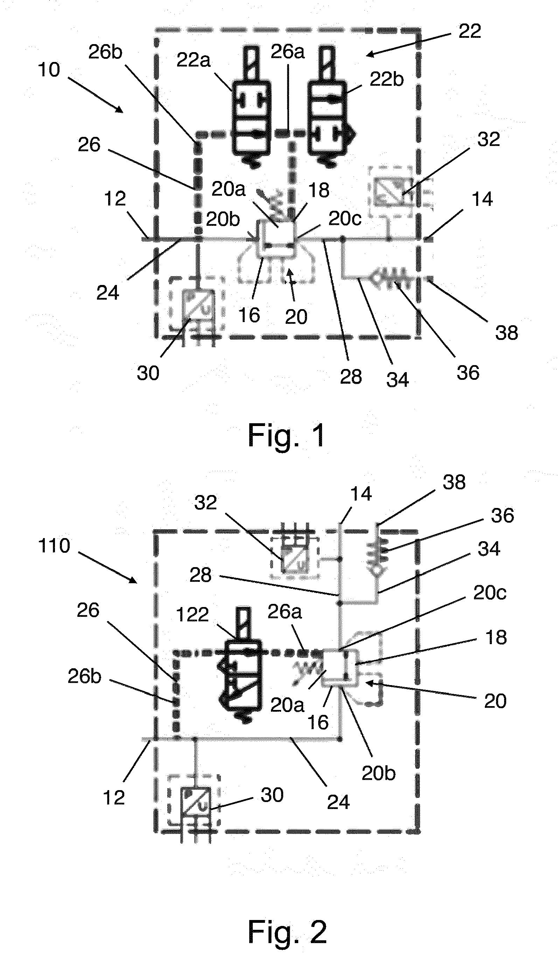

**Fig. 1** shows a schematic circuit arrangement of a first embodiment of a control valve device 10 according to the invention for an air treatment device of a vehicle.

The control valve device 10 is formed as protection valve device 10 or circuit-protection valve device 10 for an air treatment device of a vehicle (each not shown in Fig. 1).

The vehicle is formed as a utility or commercial vehicle.

According to Fig. 1, the control valve device 10 comprises a working inlet 12, a working outlet 14, an overflow valve 16, and a pressure limiting valve 18.

The overflow valve 16 and the pressure limiting valve 18 are integrated into a common valve unit 20.

That means that the overflow valve 16 and the pressure limiting valve 18 share the same components of the common valve unit 20.

The common valve 20 unit is further connected with the working inlet 12 and with the working outlet 14.

The control valve device 10 further comprises a solenoid control valve unit 22.

The solenoid control valve unit 22 unit is connected with control chamber 20a of the common valve unit 20 via a control inlet.

As indicated by the dashed boarder line, overflow valve 16, the pressure limiting valve 18, and the solenoid control valve unit 22 form a common construction unit.

The common valve unit 20 comprises further a valve inlet 20b that is connected to the working inlet 12 via an inlet line 24.

Further, a control line 26 is branched off the inlet line 24 between the valve inlet 20b and the working inlet 12.

Moreover, the solenoid control valve unit 22 is arranged in the control line 26 by means of which the solenoid control valve unit 26 is connected to the control chamber 20a of the common valve unit 20.

The control line 26 further comprises a first control line section 26a and a second control line section 26b.

The first control line section 26a extends between the solenoid control valve unit 22 and the control chamber 20a.

Accordingly, the second control line section 26b extends between the solenoid valve unit 22 and the inlet line 24, where the control line 26 branches off the inlet line 24.

According to the first embodiment of the present invention, the solenoid control valve unit 22 comprises a 2/2-way solenoid aeration valve 22a and a 2/2-way solenoid de-aeration valve 22b.

The first 2/2-way solenoid aeration valve 22a divides the control line 26 into the first and second control line sections 26a, 26b, wherein the second 2/2-way solenoid aeration valve 22b is connected to the first control line section 26a via a control branch-off.

The first 2/2-way solenoid valve 22a may be formed as a currentless open 2/2-way solenoid valve.

Alternatively, the first 2/2-way solenoid valve 22a may be formed as a currentless closed 2/2-way solenoid valve.

Accordingly, the second 2/2-way solenoid valve 22b may be formed as a currentless open 2/2-way solenoid valve.

Alternatively, the second 2/2-way solenoid valve 22b may be formed as a currentless closed 2/2-way solenoid valve.

Thus, the first and second 2/2-way solenoid valve 22a, 22b each have an open and closed state.

The solenoid control valve unit 22 correspondingly comprises an aeration state for aeration or air suppling of the control chamber 20a of the common valve unit 20.

Consequently, the solenoid control valve unit 22 also comprises a de-aeration state for de-aeration or venting of the control chamber 20a to the atmosphere.

In the aeration state, the control chamber 20a is connected to the working inlet 12 via the first 2/2-way solenoid valve 22a together with the control line 26 and the inlet line 24.

To achieve the aeration state, the first 2/2-way solenoid valve 22a is in its open state, wherein the second 2/2-way solenoid valve 22b is in its closed or separated state accordingly.

In the de-aeration state of the solenoid control valve unit 22, the control chamber 20a is connected to the atmosphere via the first control line section 26a and the solenoid control valve unit 22.

To achieve the de-aeration state, the first 2/2-way solenoid valve 22a is in its closed or separated state, wherein the second 2/2-way solenoid valve 22b is in its open state accordingly in order to connect the control chamber directly with the atmosphere.

According to Fig. 1, the common valve unit 20 further comprises a valve outlet 20c that is connected to the working outlet 14 via an outlet line 28.

The control valve device 10 also comprises a first pressure sensor 30 that is arranged such that a pressure of the working inlet 12 is sensed by it.

Additionally or alternatively, the first pressure sensor 30 may be arranged such that a pressure of the control chamber 20a is sensed by it.

To this end, the first pressure sensor 30 is preferably arranged in the inlet line 24.

The first pressure sensor 30 may be integrated into the common construction unit or it may be arranged externally and may be connected to the inlet line 24 via a sensor line.

Additionally or alternatively, it is also conceivable that a further pressure sensor (not shown) is arranged in the first or second control line section 26a, 26b.

According to Fig. 1, the control valve device 10 further comprises a second pressure sensor 32 that is arranged in the outlet line 28.

The second pressure sensor 32 may be integrated into the common construction unit or it may be arranged externally and may be connected to the outlet line 24 via a further sensor line.

The first and second pressure sensors 30, 32 are connected to an electronic control unit (not shown) that is further connected to the first and second 2/2-way solenoid valve 22a, 22b in order to control the control valve device 10 appropriately.

Between the valve outlet 20c of the common valve unit 20 and the working outlet 14, a safety line 34 is branched-off the outlet line 34, wherein a safety check valve 36 is arranged in this safety line 34.

This safety line 34 extends between the outlet line 28 and a further safety outlet 38 of the control valve device 10, which may be connected to the atmosphere.

Additionally, the common valve unit 20 may comprise a first and second control ports, wherein the first control port is connected so the inlet line 24 and the second control port is connected to the outlet line 28.

According to the invention, a multi-circuit protection valve device for an air treatment device of a utility vehicle (all not shown in Fig. 1) is provided comprising at least one control valve device 10 as mentioned above.

**Fig. 2** shows a schematic circuit arrangement of a second embodiment of a control valve device 110 according to the invention for an air treatment device of a vehicle.

The second embodiment of the control valve device 110 comprises substantially the same structural and functional features as the first embodiment as stated in connection with Fig. 1, wherein the following differences should be discussed:
First, features of the second embodiment that are substantially the same with regard to the first embodiment have the same reference signs, only whose corresponding features of the first and second embodiment that differ from each other have a reference sign that is increased by the number 100.

Instead of two 2/2-way solenoid valves 22a, 22b as in the first embodiment, the solenoid control valve unit 22 comprises a 3/2-way solenoid control valve 122.

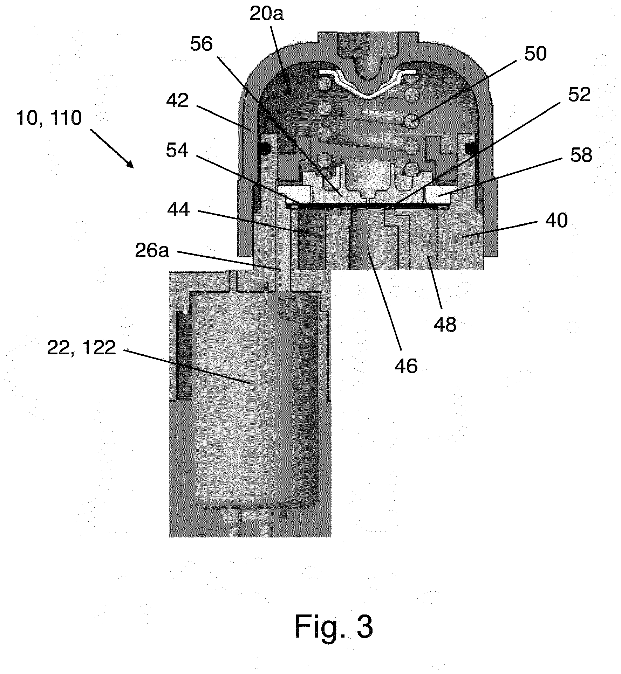

**Fig. 3** shows a schematic sectional drawing of the control valve device 10, 110 according to Fig. 1 or Fig. 2.

The control valve 10, 110 comprises a housing 40, in which the common valve unit is integrated and comprises a cover 42 that is formed as a dome and screwed to the corresponding end of the housing 40.

Further, the housing 40 comprises an inlet aperture 44 that is connected to the valve inlet 20b and an outlet aperture 46 that is connected to the valve outlet 20c accordingly (see Fig. 1).

Further, the housing 40 comprises a first pressure chamber 48 that is connected to the inlet aperture 44 and formed as a ring chamber around the outlet aperture 46.

Additionally, the control chamber 20a (as a second pressure chamber) is arranged in the cover 42, where also a spring 50 is arranged.

Also, a valve seat 52 is provided and being arranged at this end of the first pressure chamber 48, which faces a diaphragm 54 that is bounded by a valve piston 56 and a fastening ring 58 that fixes the diaphragm 54 to the housing 40.

Further, the piston 56 is displaceably guided at the fastening ring 58 and pre-tensioned by the spring 50, wherein also the control pressure within the control chamber 20a acts upon the pneumatic effective area of the piston 56.

The valve seat 52 serves as a common seat for both of the overflow valve 16 and of pressure limiting valve 18 (see Fig. 1 and 2) being one integrated valve unit sharing the same parts.

The control valve device 10, 110 also comprises the solenoid control valve unit 22, 122 that is connected with the inlet line (not shown in Fig. 3) and the control chamber 20a via the first control line section 26a.

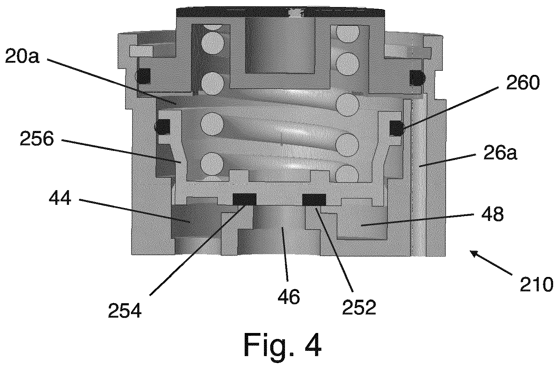

**Fig. 4** shows another schematic and sectional drawing of the control valve device 210 according to Fig. 1 or Fig. 2.

The control valve device 210 comprises substantially the same structural and functional features as the control valve device 110 as of Fig. 3, wherein the following differences should be discussed:
First, features that are substantially the same with regard to those of Fig. 3 have the same reference signs, only whose corresponding features that differ from the features of Fig. 3 have a reference sign that is increased by the number 200.

Instead of a diaphragm (see Fig. 3), the piston 256 has an axial sealing 254 that seals the piston 256 with regard to the valve seat 252.

Further, the piston 256 is directly and displaceably guided in the housing 40 and sealed against it by an additional radial sealing 260 in form of an O-ring 260 in order to separate the control chamber 20a in an air-tight manner against the first pressure chamber 248.

The function of the control valve 10, 110, 210 according to Fig. 1 to 4 is as follows:
First, compressed air is fed to the working inlet 12 of the control valve device 10 flowing to the valve inlet 20b and to the solenoid control valve unit 22 (see Fig. 1 and 2).

The control pressure in the control chamber 20a (see Fig. 3 and 4) of the solenoid control valve unit 22 serves for the adjustment both of an opening and closing pressure of the overflow valve 16 and of an opening and closing pressure of the pressure limiting valve 18 being integrated in a common valve unit 20.

So, the electronically controlled overflow valve 16 and pressure limiting valve 18 provide opening and closing pressures and limited pressures according to the actual vehicle demand and in connection with the different circuits (for service brake, parking brake, suspension, and further auxiliary devices) to which the control valve device 10 is connectable (by using a plurality of such control valve devices 10, 110, 210).

During an idle phase the diaphragm 54 or piston 56, 256 (see Fig. 3 and 4) is held in closed position by the preloaded spring 50 (see Fig. 3 and 4) and a vented control chamber 20a.

In a load phase, pressure initially is increasing in the first pressure chamber 48.

Then, the solenoid control valve unit 22, 122 pressurizes the control chamber 20a via the control line 26 due to its open state, when no current is supplied by an electronic control unit.

In answer to this control state, the diaphragm 54 or piston 56, 256 is held in closed position.

The inlet pressure increases until the opening pressure demand of vehicle pneumatic system occurs.

Based on the signal of the first pressure sensor 30, the solenoid control valve unit 22, 122 vents the control chamber 20a to the atmosphere via the first control line section 26a.

The diaphragm 54 or piston 56, 256 lifts-up from valve seat 52, 252 such that the pressure at outlet aperture 46 is increasing to a predetermined level (that is connected to the working outlet 14 of the control valve device 10 in order to supply several consumers with pressurized air).

The function, as described above, relates to an overflow function such that specified, but variable, opening pressures may me adjusted or controlled, and held.

During pressure limitation function, the pressure at the outlet aperture 46 is increased until a pressure limitation demand or pressure maximum condition (may be sensed by the second pressure sensor 32, specific to the different circuits of the vehicle) of the vehicle pneumatic system is reached.

The solenoid control valve unit 22, 122 then pressurizes the control chamber 20a via control line 26 (see Fig. 1 and 2), wherein in answer to this, the diaphragm 54 or piston 56, 256 moves back to the valve seat 52, 252 into a closed and sealed position resulting in a limitation of the pressure increasing at outlet aperture 46 and the working outlet 14.

That is, the pressure limitation function may be controlled variably by pressurizing the control chamber 20a according to a current pressure demand and/or predetermined pressure values or limits at the working outlet 14 (sensed by the second pressure sensor) of the control valve device 10, 110, 210.

### REFERENCE SIGNS

- 10: control valve device
- 12: working inlet
- 14: working outlet
- 16: overflow valve
- 18: pressure limiting valve
- 20: common valve unit
- 20a: control chamber, second pressure chamber
- 20b: valve inlet
- 20c: valve outlet
- 22: solenoid control valve unit
- 22a: 2/2-way solenoid aeration valve
- 22b: 2/2-way solenoid de-aeration valve
- 24: inlet line
- 26: control line
- 26a: first control line section
- 26b: second control line section
- 28: outlet line
- 30: first pressure sensor
- 32: second pressure sensor
- 34: safety line
- 36: safety check valve
- 38: safety outlet
- 40: housing
- 42: cover
- 44: inlet aperture
- 46: outlet aperture
- 48: first pressure chamber
- 50: spring
- 52: valve seat
- 54: diaphragm
- 56: piston
- 58: fastening ring

- 110: Control valve device
- 122: Solenoid control valve unit, 3/2-way solenoid control valve

- 210: Control valve device
- 252: valve seat
- 254: axial sealing
- 256: piston
- 260: radial sealing, O-ring

## Claims

1. Control valve device (10, 110, 210), especially protection valve device, for an air treatment device of a vehicle, especially utility vehicle with at least one working inlet (12); with at least one working outlet (14); with at least one overflow valve (16); with at least one pressure limiting valve (18), **characterised in that** the overflow valve (16) and the pressure limiting valve (18) are integrated into at least one common valve unit (20), wherein the common valve unit (20) is connected with the working inlet (12) and the working outlet (14); and with at least one solenoid control valve unit (22, 122), wherein the solenoid control valve unit (22, 122) is connectable with at least one control chamber (20a) of the common valve unit (20).

2. Control valve device (10, 110, 210) according to claim 1,
**characterized in that**
overflow valve (16), the pressure limiting valve (18), and the solenoid control valve unit (22, 122) form a common construction unit.

3. Control valve device (10, 110, 210) according to claim 1 or claim 2,
**characterized in that**
wherein the overflow valve (16) and the pressure limiting valve (18) share the same components of the common valve unit (20).

4. Control valve device (10, 110, 210) according to one of the preceding claims,
**characterized in that**
the common valve unit (20) comprises at least one valve inlet (20b) that is connected to the working inlet (12) via at least one inlet line (24), wherein at least one control line (26) is branched off the inlet line (24), and wherein the solenoid control valve unit (22, 122) is arranged in the control line (26) by means of which the solenoid control valve unit (22, 122) is connected to the control chamber (20a).

5. Control valve device (10, 110, 210) according to claim 4,
**characterized in that**
control line (26) is branched off the inlet line (24) between the valve inlet (20b) and the working inlet (12).

6. Control valve device (10, 110, 210) according to one of the preceding claims,
**characterized in that**
the solenoid control valve unit (22, 122) comprises at least one aeration state for aeration of the control chamber (20a) and the solenoid control valve unit (22, 122) comprises at least one de-aeration state for de-aeration of the control chamber (20a).

7. Control valve device (10, 110, 210) according to claim 6,
**characterized in that**,
in the aeration state, the control chamber (20a) is connected to the working inlet (12) via at least the solenoid control valve unit (22, 122) and the control line (26).

8. Control valve device (10, 110, 210) according to claim 6 or claim 7,
**characterized in that**
the control line (26) comprises at least one first control line section (26a) extending between the solenoid control valve unit (22, 122) and the control chamber (20a) and wherein, in the de-aeration state, the control chamber (20a) is connected to the atmosphere via the first control line section (26) and the solenoid control valve unit (22, 122).

9. Control valve device (110, 210) according to one of the preceding claims,
**characterized in that**
the solenoid control valve unit (122) comprises at least one 3/2-way solenoid control valve (122).

10. Control valve device (10, 210) according to one of the preceding claims 1 to 8,
**characterized in that**
the solenoid control valve unit (22) comprises at least one 2/2-way solenoid aeration valve (22a) and at least one 2/2-way solenoid de-aeration valve (22b).

11. Control valve device (10, 110, 210) according to one of the preceding claims,
**characterized in that**
the control valve device (10, 110, 210) comprises at least one first pressure sensor (30) that is arranged such that at least one pressure of the working inlet (12) and/or the control chamber (20a) is sensed by the first pressure sensor (30).

12. Control valve device (10, 110, 210) according to claim 11,
**characterized in that**
the first pressure sensor (30) is arranged in the inlet line (24).

13. Control valve device (10, 110, 210) according to one of the preceding claims,
**characterized in that**
the common valve unit (20) comprises at least one valve outlet (20c) that is connected to the working outlet (14) via at least one outlet line (28) and wherein the control valve device (10, 110, 210) comprises at least one second pressure sensor (32) that is arranged in the outlet line (28).

14. Multi-circuit protection valve device for an air treatment device of a vehicle, especially utility vehicle, with at least one control valve device according to one of the preceding claims 1 to 13.

## Patentansprüche

1. Steuerventilvorrichtung (10, 110, 210), insbesondere Schutzventilvorrichtung, für eine Luftbehandlungsvorrichtung eines Fahrzeugs, insbesondere Nutzfahrzeugs, mit mindestens einem Arbeitseingang (12); mit mindestens einem Arbeitsausgang (14); mit mindestens einem Überströmventil (16); mit mindestens einem Druckbegrenzungsventil (18), **dadurch gekennzeichnet,**
**dass** das Überströmventil (16) und das Druckbegrenzungsventil (18) in mindestens eine gemeinsame Ventileinheit (20) integriert sind, wobei die gemeinsame Ventileinheit (20) mit dem Arbeitseingang (12) und dem Arbeitsausgang (14) verbunden ist; und mit mindestens einer Magnetsteuerventileinheit (22, 122), wobei die Magnetsteuerventileinheit (22, 122) mit mindestens einer Steuerkammer (20a) der gemeinsamen Ventileinheit (20) verbindbar ist.

2. Steuerventilvorrichtung (10,110, 210) gemäß Anspruch 1,
**dadurch gekennzeichnet, dass**
das Überströmventil (16), das Druckbegrenzungsventil (18) und die Magnetsteuerventileinheit (22, 122) eine gemeinsame Baueinheit bilden.

3. Steuerventilvorrichtung (10, 110,210) gemäß Anspruch 1 oder Anspruch 2,
**dadurch gekennzeichnet, dass**
wobei das Überströmventil (16) und das Druckbegrenzungsventil (18) die gleichen Komponenten der gemeinsamen Ventileinheit (20) nutzen.

4. Steuerventilvorrichtung (10, 110, 210) gemäß einem der vorhergehenden Ansprüche,
**dadurch gekennzeichnet, dass**
die gemeinsame Ventileinheit (20) mindestens einen Ventileingang (20b) umfasst, der über mindestens eine Eingangsleitung (24) mit dem Arbeitseingang (12) verbunden ist, wobei von der Eingangsleitung (24) mindestens eine Steuerleitung (26) abgezweigt ist, und wobei in der Steuerleitung (26) die Magnetsteuerventileinheit (22, 122) angeordnet ist, über die die Magnetsteuerventileinheit (22, 122) mit der Steuerkammer (20a) verbunden ist.

5. Steuerventilvorrichtung (10, 110, 210) gemäß Anspruch 4,
**dadurch gekennzeichnet, dass**
die Steuerleitung (26) von der Eingangsleitung (24) zwischen dem Ventileingang (20b) und dem Arbeitseingang (12) abgezweigt ist.

6. Steuerventilvorrichtung (10, 110, 210) gemäß einem der vorhergehenden Ansprüche,
**dadurch gekennzeichnet, dass**
die Magnetsteuerventileinheit (22, 122) mindestens einen Belüftungszustand zum Belüften der Steuerkammer (20a) und die Magnetsteuerventileinheit (22, 122) mindestens einen Entlüftungszustand zum Entlüften der Steuerkammer (20a) umfasst.

7. Steuerventilvorrichtung (10, 110, 210) gemäß Anspruch 6,
**dadurch gekennzeichnet, dass**
im Belüftungszustand die Steuerkammer (20a)über mindestens die Magnetsteuerventileinheit (22, 122) und die Steuerleitung (26) mit dem Arbeitseingang (12) verbunden ist.

8. Steuerventilvorrichtung (10, 110, '210) gemäß Anspruch 6 oder Anspruch 7,
**dadurch gekennzeichnet, dass**
die Steuerleitung (26) mindestens einen ersten Steuerleitungsabschnitt (26a) umfasst, der sich zwischen der Magnetsteuerventileinheit (22, 122) und der Steuerkammer (20a) erstreckt, und wobei im Entlüftungszustand die Steuerkammer (20a) über den ersten Steuerleitungsabschnitt (26) und die Magnetsteuerventileinheit (22, 122) mit der Atmosphäre verbunden ist.

9. Steuerventilvorrichtung (110, 210) gemäß einem der vorhergehenden Ansprüche,
**dadurch gekennzeichnet, dass**
die Magnetsteuerventileinheit (122) mindestens ein 3/2-Wege-Magnetsteuerventil (122) umfasst.

10. Steuerventilvorrichtung (10, 210) gemäß einem der vorhergehenden Ansprüche 1 bis 8,
**dadurch gekennzeichnet, dass**
die Magnetsteuerventileinheit (22) mindestens ein 2/2-Wege-Magnetbelüftungsventil (22a) und mindestens ein 2/2-Wege-Magnetentlüftungsventil (22b) umfasst.

11. Steuerventilvorrichtung (10, 110, 210) gemäß einem der vorhergehenden Ansprüche,
**dadurch gekennzeichnet, dass**
die Steuerventilvorrichtung (10, 110, 210) mindestens einen ersten Drucksensor (30) umfasst, der so eingerichtet ist, dass mindestens ein Druck des Arbeitseingangs (12) und/oder der Steuerkammer (20a) durch den ersten Drucksensor (30) erfasst wird.

12. Steuerventilvorrichtung (10, 110, 210:) gemäß Anspruch 11,
**dadurch gekennzeichnet, dass**
der erste Drucksensor (30) in der Eingangsleitung (24) angeordnet ist.

13. Steuerventilvorrichtung (10, 110, 210) gemäß einem der vorhergehenden Ansprüche,
**dadurch gekennzeichnet, dass**
die gemeinsame Ventileinheit (20) mindestens einen Ventilausgang (20c) umfasst, der über mindestens eine Ausgangsleitung (28) mit dem Arbeitsausgang (14) verbunden ist und wobei die Steuerventilvorrichtung (10, 110, 210) mindestens einen zweiten Drucksensor (32) umfasst, der in der Ausgangsleitung (28) angeordnet ist.

14. Mehrkreisschutzventilvorrichtung für eine Luftbehandlungsvorrichtung eines Fahrzeugs, insbesondere Nutzfahrzeugs, mit mindestens einer Steuerventilvorrichtung gemäß einem der vorhergehenden Ansprüche 1 bis 13.

## Revendications

1. Dispositif (10, 110, 210) à soupape de commande, en particulier dispositif à soupape de protection, pour un dispositif de conditionnement d'air d'un véhicule, en particulier d'un véhicule utilitaire, comprenant au moins une entrée (12) de travail ; comprenant au moins une sortie (14) de travail ; comprenant au moins une soupape (16) de décharge ; comprenant au moins une soupape (18) de limitation de la pression,
**caractérisé en ce que**
la soupape (16) de décharge et la soupape (18) de limitation de la pression sont intégrées en au moins une unité (20) de soupape commune, dans lequel l'unité (20) de soupape commune communique avec l'entrée (12) de travail et avec la sortie (14) de travail ; et comprenant au moins une unité (22, 122) d'électrovanne de commande, dans lequel l'unité (22, 122) d'électrovanne de commande communique avec au moins une chambre (20a) de commande de l'unité (20) de soupape commune.

2. Dispositif (10, 110, 210) à soupape de commande suivant la revendication 1,
**caractérisé en ce que**
la soupape (16) de décharge, la soupape (18) de limitation de la pression et l'unité (22, 122) d'électrovanne de commande forment une unité de construction commune.

3. Dispositif (10, 110, 210) suivant la revendication 1 ou 2, **caractérisé en ce que**
la soupape (16) de décharge et la soupape (18) de limitation de la pression partagent les mêmes composants de l'unité (20) de soupape commune.

4. Dispositif (10, 110, 210) suivant l'une des revendications précédentes,
**caractérisé en ce que**
l'unité (20) de soupape commune comprend au moins une entrée (20b) de soupape, qui communique avec l'entrée (12) de travail par au moins une ligne (24) d'entrée, dans lequel au moins une ligne (26) de commande bifurque de la ligne (24) d'entrée, et dans lequel l'unité (22, 122) d'électrovanne de commande est montée dans la ligne (26) de commande, au moyen de laquelle l'unité (22, 122) d'électrovanne de commande communique avec la chambre (20a) de commande.

5. Dispositif (10, 110, 210) suivant la revendication 4, **caractérisé en ce que**
la ligne (26) de commande bifurque de la ligne (24) d'entrée, entre l'entrée (20b) de la soupape et l'entrée (12) de travail.

6. Dispositif (10, 110, 210) suivant l'une des revendications précédentes,
**caractérisé en ce que**
l'unité(22, 122) d'électrovanne de commande comprend au moins un état d'aération pour l'aération de la chambre (20a) de commande, et d'unité (22, 122) d'électrovanne de commande comprend au moins un état de désaération pour la désaération de la chambre (20a) de commande.

7. Dispositif (10, 110, 210) suivant la revendication 6, **caractérisé en ce que**
dans l'état d'aération, la chambre (20a) de commande communique avec l'entrée (12) de travail par au moins l'unité (22, 122) d'électrovanne de commande et par la ligne (26) de commande.

8. Dispositif (10, 110, 210) suivant la revendication 6 ou la revendication 7,
**caractérisé en ce que**
la ligne (26) de commande comprend au moins un premier tronçon (26a) de la ligne de commande s'étendant entre l'unité (22, 122) d'électrovanne de commande et la chambre (20a) de commande et dans lequel, dans l'état de désaération, la chambre (20a) de commande communique avec l'atmosphère par le premier tronçon (26) de la ligne de commande et par l'unité (22, 122) d'électrovanne de commande.

9. Dispositif (110, 210) suivant l'une des revendications précédentes,
**caractérisé en ce que**
l'unité (122) d'électrovanne de commande comprend au moins une électrovanne (122) de commande à 3/2 voies.

10. Dispositif (10, 210) suivant l'une des revendications 1 à 8 précédentes,
**caractérisé en ce que**
l'unité (22) d'électrovanne de commande comprend au moins une électrovanne (22a) d'aération à 2/2 voies et/au moins une électrovanne (22b) de désaération à 2/2 voies.

11. Dispositif (10, 110, 210) suivant l'une des revendications précédentes,
**caractérisé en ce que**
le dispositif (10, 110, 210) à soupape de commande comprend au moins un premier capteur (30) de pression, qui est monté de manière à détecter au moins une pression de l'entrée (12) de travail et/ou de la chambre (20a) de commande par le premier capteur (30) de pression.

12. Dispositif (10, 110, 210) suivant revendication 11,
**caractérisé en ce que**
le premier capteur (30) de pression est monté dans la ligne (24) d'entrée.

13. Dispositif (10, 110, 210) suivant l'une des revendications précédentes,
**caractérisé en ce que**
l'unité (20) commune de soupape, comprend au moins une sortie (20c) de soupape, qui communique avec la sortie (14) de travail par au moins une ligne (28) de sortie, et dans lequel le dispositif (10, 110, 210) à soupape de commande comprend au moins un deuxième capteur (32) de pression, qui est monté dans la ligne (28) de sortie.

14. Dispositif multi-circuits à soupape de protection pour un dispositif de conditionnement d'air d'un véhicule, en particulier d'un véhicule utilitaire, comprenant au moins un dispositif à soupape de commande suivant l'une des revendications 1 à 13 précédentes.
